# EUROPEAN PATENT APPLICATION

(11) **EP 4 753 093 A1**
(43) Date of publication of application: **03.06.2026**
(21) Application number: 24847697.0
(22) Date of filing: 10.05.2024
(51) Int. Cl.: H02J 1/10, H02J 9/06, H02J 7/00

(54) **BATTERY-MANAGEMENT-SYSTEM POWER SUPPLY CIRCUIT OF ENERGY STORAGE SYSTEM, AND ENERGY STORAGE VALVE AND ENERGY STORAGE STATION**

(30) Priority: 31.07.2023 CN 202310954598
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LAI, Risong, Shanghai 200241 (CN); LEI, Zhifang, Shanghai 200241 (CN); HUANG, Xisheng, Shanghai 200241 (CN); PENG, Hao, Shanghai 200241 (CN); YU, Dongxu, Shanghai 200241 (CN); LU, Yanhua, Shanghai 200241 (CN)
(74) Representative: Gong, Jinping
(86) International application number: PCT/CN2024/092271
(87) International publication number: WO 2025/025732

(57) **Abstract**

This application pertains to the field of power electronics technology and provides a power supply circuit for a battery management system of an energy storage system, an energy storage valve, and an energy storage station. When an energy storage submodule (10) where the battery management system in the power supply circuit for the battery management system is located operates normally, a battery module (Bat) of the energy storage submodule (10) is selected to supply power to the battery management system. When the energy storage submodule (10) where the battery management system is located is bypassed, energy storage submodules (10') other than the energy storage submodule (10) where the battery management system is located are selected to supply power to the battery management system, thereby mitigating the issue of over-discharge in the battery module (Bat) of the bypassed energy storage submodule (10) due to the continuous consumption of the battery management system. Furthermore, all battery management systems within the energy storage submodule (10) are controlled to be powered by batteries of electric cabinets (100) where the battery management systems are located, allowing for the charge level uniformity of the electric cabinets (100) in the same energy storage submodule (10).

## Description

This application claims the priority to the Chinese Patent Application No. 202310954598.7, filed with the China National Intellectual Property Administration on July 31, 2023 and titled "POWER SUPPLY CIRCUIT FOR BATTERY MANAGEMENT SYSTEM OF ENERGY STORAGE SYSTEM, ENERGY STORAGE VALVE, AND ENERGY STORAGE STATION", which is incorporated herein by reference in its entirety.

### TECHNICAL FIELD

This application pertains to the field of power electronics technology, and particularly relates to a power supply circuit for a battery management system of an energy storage system, an energy storage valve, and an energy storage station.

### BACKGROUND

In a conventional high-voltage direct-connected energy storage systems, a power supply system for a battery management system (Battery Management System, BMS) typically draws power from a battery module within an electric cabinet. However, this approach presents the following issues: for example, after an energy storage submodule is bypassed due to a fault, its battery module may remain in a long-term idle state due to a series of reasons such as maintenance cycles. However, to meet the safety and reliability requirements of the high-voltage direct-connected energy storage system, the monitoring of the battery module is not allowed to be lost, that is, a battery management system performing a battery monitoring function needs to be continuously powered. Consequently, after the energy storage submodule is bypassed, the idle battery module may experience deep over-discharge due to the continuous consumption of the battery management system, leading to irreversible damage to the battery and wastage of battery cells.

### SUMMARY

In view of the above issues, this application provides a power supply circuit for a battery management system of an energy storage system, an energy storage valve, and an energy storage station, aiming to address the issue that an idle battery module in the relevant energy storage system experiences deep over-discharge due to the continuous consumption of the battery management system, which otherwise causes irreversible damage.

According to a first aspect, an embodiment of this application provides a power supply circuit for a battery management system of an energy storage system, where the energy storage system includes a plurality of energy storage submodules and a direct-current bus connected to the energy storage submodules; and the power supply circuit for the battery management system includes:
a first power supply module connected to a battery module and configured to supply power to the battery management system based on electrical energy of the battery module; and
a second power supply module connected to the direct-current bus and configured to supply power to the battery management system based on electrical energy of the direct-current bus, where the electrical energy of the direct-current bus comes from energy storage submodules in the energy storage system other than the energy storage submodule where the battery management system is located.

In the technical solution of this embodiment of this application, two power supply modes are provided for the battery management system. When the battery module is in a normal idle state, the battery management system can be powered by the energy storage submodules other than the energy storage submodule where the battery management system is located, thereby mitigating the issue of deep over-discharge in the idle battery module due to the continuous consumption of the battery management system.

In some embodiments, the power supply circuit further includes a power supply selection module, where the power supply selection module is connected to the first power supply module, the second power supply module, and the battery management system; and the power supply selection module is configured to:
select the first power supply module to supply power to the battery management system when the energy storage submodule where the battery management system is located operates normally; and
select the second power supply module to supply power to the battery management system when the energy storage submodule where the battery management system is located is bypassed.

In the technical solution of the embodiments of this application, the power supply selection module is configured to select the battery module to supply power to the battery management system or select the energy storage submodules other than the energy storage submodule where the battery management system is located to supply power to the battery management system, thereby mitigating the issue of over-discharge in the battery module of the bypassed energy storage submodule due to the continuous consumption of the battery management system.

In some embodiments, the battery module is connected to a battery management system within a same electric cabinet through the first power supply module and configured to supply power to the battery management system.

In the technical solution of the embodiments of this application, battery management systems of electric cabinets in a same energy storage submodule are powered by battery modules in the electric cabinets where the battery management systems are located, thereby improving the charge level uniformity of batteries of the electric cabinets in the same energy storage submodule.

In some embodiments, when the energy storage submodule where the battery management system is located operates normally, the second power supply module is in a hot standby state.

In the technical solution of the embodiments of this application, when the energy storage submodule operates normally, the second power supply module outputs voltage but no current, that is, the second power supply module outputs no power, thereby optimizing the load power of the direct-current bus.

In some embodiments, the power supply selection module includes a first input terminal, a second input terminal, an output terminal, and a changeover switch unit, where
the first input terminal of the power supply selection module is connected to an output terminal of the first power supply module and a first terminal of the changeover switch unit; the second input terminal of the power supply selection module is connected to an output terminal of the second power supply module and a second terminal of the changeover switch unit; a third terminal of the changeover switch unit is connected to the output terminal of the power supply selection module; the output terminal of the power supply selection module is connected to a power supply terminal of the battery management system; and the changeover switch unit is configured to control switching between connection of the first input terminal of the power supply selection module to the output terminal and connection of the second input terminal to the output terminal.

In the technical solution of the embodiments of this application, the changeover switch module can be configured to select the first input terminal of the power supply selection module to be connected to the output terminal or select the second input terminal of the power supply selection module to be connected to the output terminal, thereby enabling active or automatic selection of different power supply modes for the battery management system, and addressing the issue of deep over-discharge in the idle battery module due to the continuous consumption of the battery management system, which otherwise causes irreversible damage.

In some embodiments, the changeover switch unit includes a first switch element, a first unidirectional conductor, and a second unidirectional conductor; one terminal of the first switch element serves as the first terminal of the changeover switch unit; another terminal of the first switch element is connected to an input terminal of the first unidirectional conductor; an input terminal of the second unidirectional conductor serves as the second terminal of the changeover switch unit; an output terminal of the first unidirectional conductor is connected to an output terminal of the second unidirectional conductor and serves as the third terminal of the changeover switch unit;
where a sum of impedance of the first switch element and impedance of the first unidirectional conductor is less than impedance of the second unidirectional conductor.

In the technical solution of the embodiments of this application, the power supply selection module is configured to, when the energy storage submodule is in a normal operating state, enable the first switch element to be in a normally closed state; since the sum of the impedance of the first switch element and the impedance of the first unidirectional conductor is less than the impedance of the second unidirectional conductor, the battery management system is powered by a battery module in a same electric cabinet. After the energy storage submodule is bypassed, the first switch element is controlled to open. In this case, power is drawn from the direct-current bus (that is, energy storage submodules other than the energy storage submodule where the battery management system is located) and supplied to the battery management system. Additionally, the first unidirectional conductor and the second unidirectional conductor can also prevent backflow of current flowing to the output terminal of the power supply selection module, providing anti-interference protection for the first power supply module and the second power supply module and improving the stability of the power supply to the battery management system. This structure of the changeover switch module also allows the second power supply module to provide voltage to the second unidirectional conductor without outputting current and remain in a hot standby state when the energy storage submodule where the battery management system is located operates normally.

In some embodiments, the first unidirectional conductor includes a first diode, where an anode and a cathode of the first diode respectively serve as the input terminal and the output terminal of the first unidirectional conductor.

In the technical solution of the embodiments of this application, the diode is used to implement the first unidirectional conductor, providing backflow prevention and making the cost and loss relatively low.

In some embodiments, the number of second diodes included in the second unidirectional conductor is at least one greater than the number of first diodes; and a positive electrode and a negative electrode formed after the second diodes are connected in series in a same direction are respectively connected to the input terminal and the output terminal of the second unidirectional conductor.

In the technical solution of the embodiments of this application, the diodes are used to implement the second unidirectional conductor, providing backflow prevention and making the cost and loss relatively low. Additionally, the number of second diodes is at least one greater than the number of first diodes, under normal operating conditions of the energy storage submodule, the battery management system is primarily powered by battery modules within a same electric cabinet, and the first power supply module can also remain in a hot standby state.

In some embodiments, the energy storage submodule further includes a first controller, where the first controller is connected to the first switch element, and the first controller is configured to: control the first switch element to close when the energy storage submodule where the battery management system is located operates normally; and control the first switch element to open when the energy storage submodule where the battery management system is located is bypassed.

In the technical solution of the embodiments of this application, the first controller is configured to actively control on and off states of the first switch element in the power supply selection module, thereby achieving switching of the power supply modes for the battery management system, and featuring a simple and reliable control method.

In some embodiments, the first controller is, for example, a submodule controller or a battery management controller. The controller of the energy storage submodule is configured to implement the switching of the power supply modes for the battery management system, eliminating the need for a separate controller, thus reducing the cost.

In some embodiments, the first power supply module includes a first direct current conversion circuit, where an input terminal of the first direct current conversion circuit is connected to the battery module, and an output terminal of the first direct current conversion circuit is connected to the power supply selection module.

In the technical solution of the embodiments of this application, an implementation method of the first power supply module is provided.

In some embodiments, the second power supply module includes a second direct current conversion circuit, where an input terminal of the second direct current conversion circuit is connected to the direct-current bus, and an output terminal of the second direct current conversion circuit is connected to the power supply selection module.

In the technical solution of the embodiments of this application, an implementation method of the second power supply module is provided. The first power supply module and the second power supply module respectively use different direct current conversion circuits, improving the reliability.

According to a second aspect, an embodiment of this application further provides an energy storage valve, where the energy storage valve includes a plurality of energy storage submodules and the power supply circuit for the battery management system of the energy storage system as described above.

In the technical solution of this embodiment of this application, when the energy storage submodule of the energy storage valve operates normally, a battery module of the energy storage submodule is selected to supply power to the battery management system. When the energy storage submodule is bypassed, energy storage submodules other than the energy storage submodule where the battery management system is located are selected to supply power to the battery management system, thereby mitigating the issue of over-discharge in the battery module of the bypassed energy storage submodule due to the continuous consumption of the battery management system.

According to a third aspect, an embodiment of this application further provides an energy storage station, where the energy storage station includes a plurality of energy storage submodules and the power supply circuit for the battery management system of the energy storage system as described above.

In the technical solution of this embodiment of this application, when the energy storage submodule of the energy storage station operates normally, the battery module of the energy storage submodule is selected to supply power to the battery management system. When the energy storage submodule is bypassed, energy storage submodules other than the energy storage submodule where the battery management system is located are selected to supply power to the battery management system, thereby mitigating the issue of over-discharge in the battery module of the bypassed energy storage submodule due to the continuous consumption of the battery management system.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Those of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of an energy storage system according to an embodiment of this application;
FIG. 2 is a schematic structural diagram of a power supply circuit for a battery management system of an energy storage system according to an embodiment of this application;
FIG. 3 is a schematic structural diagram of an energy storage system according to an embodiment of this application;
FIG. 4 is a schematic structural diagram of a power supply circuit for a battery management system of an energy storage system according to an embodiment of this application;
FIG. 5 is a schematic structural diagram of a power supply circuit for a battery management system of an energy storage system according to an embodiment of this application;
FIG. 6 is a schematic structural diagram of a power supply circuit for a battery management system of an energy storage system according to an embodiment of this application; and
FIG. 7 is a schematic structural diagram of an energy storage submodule of an energy storage system according to an embodiment of this application.

### DESCRIPTION OF EMBODIMENTS

The following describes in detail the embodiments of the technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two, unless otherwise specifically defined.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Those of ordinary skill in the art can understand the specific meanings of the above terms in the embodiments of this application based on specific circumstances.

Energy storage systems are mainly divided into several technical routes, including MMC (Modular Multilevel Converter, modular multilevel converter) type alternating-current direct-connected energy storage systems, direct-current direct-connected energy storage systems, and alternating-current cascaded energy storage systems. Compared to traditional energy storage technologies, direct-connected energy storage systems have higher voltage levels, larger capacities, and stronger grid regulation and support capabilities, and hold significant research importance for new power systems primarily based on new energy.

However, an existing energy storage system still faces some issues. For example, when a battery module of an energy storage submodule is idle, a battery management system is redundantly powered by external alternating current; alternatively, the battery management system may be put into a low-power mode, and the power supply system may be equipped with a miniature uninterruptible power supply (Uninterruptible Power Supply, UPS) to extend the safe idle time of the battery module as much as possible. However, in the energy storage field, external alternating-current cables pose significant insulation challenges and high costs. Moreover, with the UPS used, due to uncertainties in an initial charge level of a battery before idling and the long maintenance cycles of the energy storage system, a low-power battery management system cannot completely address the issue of over-discharge of the battery during idling.

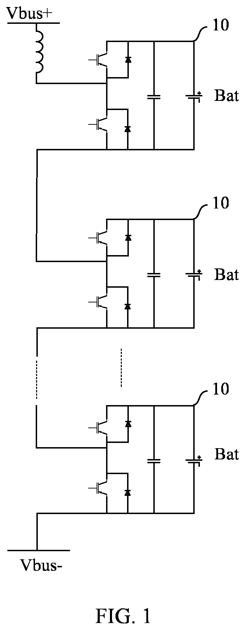

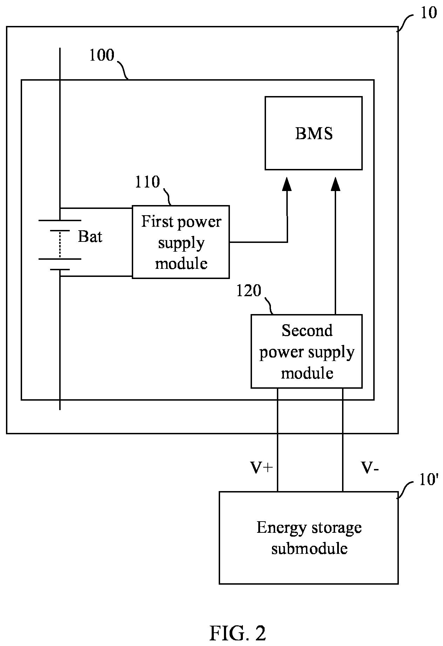

According to some embodiments of this application, FIG. 1 shows a schematic structural diagram of an energy storage system according to an embodiment of this application. FIG. 2 shows a schematic structural diagram of a power supply circuit for a battery management system of an energy storage system according to an embodiment of this application. For ease of description, only parts related to this embodiment are shown. Specific details are described below.

Referring to FIG. 1, the energy storage system includes a plurality of energy storage submodules 10, where the energy storage submodules 10 are connected in series to a direct-current power supply bus Vbus+/Vbus-. Electrical energy can be transmitted to the energy storage submodules 10 through the direct-current power supply bus Vbus+/Vbus- to achieve charging and discharging of the energy storage submodules 10. It can be understood that when an energy storage submodule 10 operates normally, a battery module Bat in the energy storage submodule 10 is connected to the direct-current power supply bus Vbus+/Vbus-, enabling charging and discharging. When an energy storage submodule 10 has a fault, the energy storage submodule 10 is bypassed, and a battery module Bat in the energy storage submodule 10 is idle.

Referring to FIG. 2, the power supply circuit for the battery management system of the energy storage system includes a first power supply module 110 and a second power supply module 120.

The first power supply module 110 is connected to a battery module Bat and configured to provide a first power supply voltage based on electrical energy of the battery module Bat. The second power supply module 120 is connected to a direct-current bus V+/V- and configured to supply power to the battery management system based on electrical energy of the direct-current bus V+/V-, where the electrical energy of the direct-current bus V+/V- comes from energy storage submodules 10' in the energy storage system other than an energy storage submodule 10 where the battery management system is located. The energy storage submodules 10' can also be considered as energy storage submodules 10' where the battery management system is not located.

The battery module Bat includes one or more batteries. In this solution, the battery management system serves as a load, and power supplied by the first power supply module 110 and the second power supply module 120 may be equal. One of the first power supply module 110 and the second power supply module 120 can be selected to supply power to the battery management system. When the direct-current bus V+/V- is configured to supply power to the battery management system via the second power supply module 120, electrical energy of the direct-current bus V+/V- comes from other energy storage submodules 10', so that electrical energy of the battery module Bat cannot be consumed.

In the technical solution of the embodiments of this application, when the energy storage submodule 10 where the battery management system is located operates normally, the battery module Bat of the energy storage submodule 10 can be selected to supply power to the battery management system. When the energy storage submodule 10 where the battery management system is located is bypassed, other energy storage submodules 10' outside the energy storage submodule 10 in the energy storage system are selected to supply power to the battery management system via the direct-current bus V+/V-, thereby mitigating the issue of over-discharge in the battery module Bat of the bypassed energy storage submodule 10 due to the continuous consumption of the battery management system.

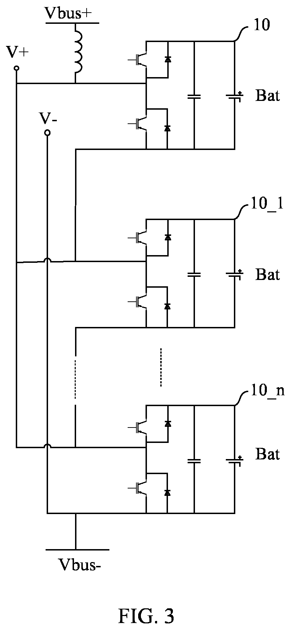

According to some embodiments of this application, FIG. 3 shows a schematic structural diagram of an energy storage system according to an embodiment of this application. Referring to FIGs. 2 and 3, for ease of description, only parts related to this embodiment are shown. Specific details are described below.

Energy storage submodules 10, 10_1, ..., and 10_n in the energy storage system are connected in parallel to the direct-current bus V+/V-, so that when the energy storage submodule 10 where the battery management system is located is bypassed, other energy storage submodules 10_1, ..., and 10_n (that is, other energy storage submodules 10' in FIG. 2) can provide the required electrical energy for the second power supply module 120 via the direct-current bus V+/V-. This avoids consuming electrical energy of the battery module Bat in the energy storage submodule 10 where the battery management system is located, mitigating the issue of over-discharge due to the continuous consumption of the battery management system.

It can be understood that the energy storage submodules 10 are connected in parallel to the direct-current bus V+/V- to collectively provide the required electrical energy for the direct-current bus V+/V-, maintaining charge level consistency of the energy storage submodules 10_1, ..., and 10_n. In some embodiments, controllable switches may be provided between the energy storage submodules 10_1, ..., and 10_n in parallel circuits of the direct-current bus V+/V-, so that during the charging and discharging of the energy storage submodules 10 via the direct-current power supply bus Vbus+/Vbus-, relationships of the energy storage submodules 10 with the parallel circuits of the direct-current bus V+/V- are disconnected, thereby avoiding the influence on the charging and discharging of the energy storage submodules 10.

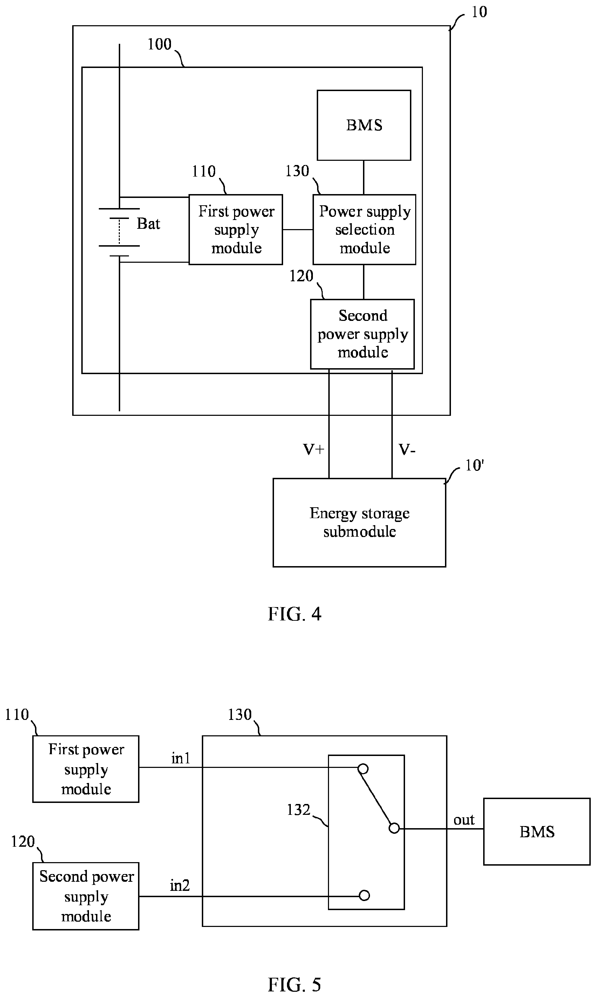

According to some embodiments of this application, FIG. 4 shows a schematic structural diagram of a power supply circuit for a battery management system of an energy storage system according to an embodiment of this application. Referring to FIGs. 1 and 4, for ease of description, only parts related to this embodiment are shown. Specific details are described below.

A power supply selection module 130 is connected to the first power supply module 110, the second power supply module 120, and the battery management system, where the power supply selection module 130 is configured to: select the first power supply module 110 to supply power to the battery management system when the energy storage submodule 10 where the battery management system is located operates normally; and select the second power supply module 120 to supply power to the battery management system when the energy storage submodule 10 where the battery management system is located is bypassed.

The power supply selection module 130 can be manually or automatically controlled. It can be understood that when the energy storage submodule 10 operates normally, the battery module Bat in the energy storage submodule 10 is connected to the direct-current power supply bus Vbus+/Vbus-, enabling charging and discharging. When the energy storage submodule 10 has a fault, the energy storage submodule 10 is bypassed, the battery module Bat in the energy storage submodule 10 is idle, and energy storage submodules 10' where the battery management system is not located are selected to supply power to the battery management system via the second power supply module 120.

In the technical solution of this embodiment of this application, the power supply selection module 130 is configured to select the battery module Bat to supply power to the battery management system or select energy storage submodules 10' other than the energy storage submodule 10 where the battery management system is located to supply power to the battery management system, thereby mitigating the issue of over-discharge in the battery module Bat of the bypassed energy storage submodule 10 due to the continuous consumption of the battery management system.

According to some embodiments of this application, referring to FIGs. 2 and 4, for ease of description, only parts related to this embodiment are shown. Specific details are described below.

The battery module Bat is connected to a battery management system within a same electric cabinet 100 via the first power supply module 110 and configured to supply power to the battery management system.

Typically, an energy storage submodule 10 may include a plurality of electric cabinets 100, where each electric cabinet 100 is provided with a battery module Bat and a battery management system. The battery management system is typically configured to manage the battery module Bat within the electric cabinet 100 and enable communication interaction with the outside. Therefore, in this embodiment, when the energy storage submodule 10 operates normally, the battery management systems of the electric cabinets 100 within a same energy storage submodule 10 are powered by the battery modules Bat within the electric cabinets 100 via the first power supply module 110, thereby improving the charge level uniformity of the battery modules Bat of the electric cabinets 100 in the same energy storage submodule 10.

In some embodiments, when the energy storage submodule 10 where the battery management system is located operates normally, the second power supply module 120 is in a hot standby state. The hot standby state of the second power supply module 120 when the energy storage submodule 10 operates normally refers to a state where the second power supply module 120 outputs voltage but no current, that is, no power is output. Therefore, load power of the direct-current power supply bus Vbus+/Vbus- is optimized.

According to some embodiments of this application, FIG. 5 shows a schematic structural diagram of a power supply circuit for a battery management system of an energy storage system according to an embodiment of this application. For ease of description, only parts related to this embodiment are shown. Specific details are described below.

A power supply selection module 130 includes a first input terminal in1, a second input terminal in2, an output terminal out, and a changeover switch unit 132.

The first input terminal in1 of the power supply selection module 130 is connected to an output terminal of a first power supply module 110 and a first terminal of the changeover switch unit 132. The second input terminal in2 of the power supply selection module 130 is connected to an output terminal of a second power supply module 120 and a second terminal of the changeover switch unit 132. A third terminal of the changeover switch unit 132 is connected to the output terminal out of the power supply selection module 130. The output terminal out of the power supply selection module 130 is connected to a power supply terminal of the battery management system. The changeover switch unit 132 is configured to select the first input terminal in1 of the power supply selection module 130 to be connected to the output terminal out or select the second input terminal in2 of the power supply selection module 130 to be connected to the output terminal out.

The changeover switch unit 132 may be an electronic switch with a single-pole double-throw function, is configured to selectively turn on a channel between the first input terminal in1 and the output terminal out or a channel between the second input terminal in2 and the output terminal out, and may use manually or automatically controlled electronic switches, such as single-pole double-throw switches, relays, or contactors. Alternatively, electronic components may be configured to form different channel impedances, allowing the current to automatically select different channels so as to output the current to the power supply terminal of the battery management system.

In the technical solution of this embodiment of this application, different power supply modes can be actively or automatically selected for the battery management system, addressing the issue of deep over-discharge in an idle battery module due to the continuous consumption of the battery management system, which otherwise causes irreversible damage.

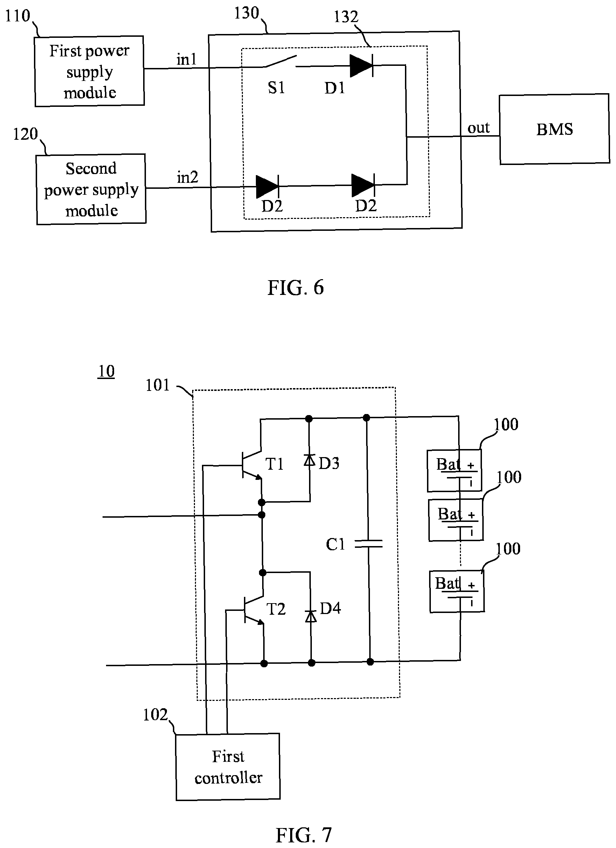

According to some embodiments of this application, FIG. 6 shows a schematic structural diagram of a power supply circuit for a battery management system of an energy storage system according to an embodiment of this application. For ease of description, only parts related to this embodiment are shown. Specific details are described below.

A changeover switch unit 132 includes a first switch element S1, a first unidirectional conductor D1, and a second unidirectional conductor D2.

One terminal of the first switch element S1 serves as a first terminal of the changeover switch unit 132 and is connected to a first input terminal in1 of a power supply selection module 130, and another terminal of the first switch element S1 is connected to an input terminal of the first unidirectional conductor D1. An input terminal of the second unidirectional conductor D2 serves as a second terminal of the changeover switch unit 132 and is connected to a second input terminal in2 of the power supply selection module 130. An output terminal of the first unidirectional conductor D1 and an output terminal of the second unidirectional conductor D2 serve as a third terminal of the changeover switch unit 132 and are connected to an output terminal out of the power supply selection module 130. A sum of impedance of the first switch element S1 and impedance of the first unidirectional conductor D1 is less than impedance of the second unidirectional conductor D2.

The first switch element S1 may be an electronic switch such as a relay or a contactor that can control the connection or disconnection of a circuit through operation. The first unidirectional conductor D1 and the second unidirectional conductor D2 may be implemented using semiconductor devices, which can prevent current backflow, protecting a power supply module which outputs no power. Additionally, setting the sum of the impedance of the first switch element S1 and the impedance of the first unidirectional conductor D1 to be less than the impedance of the second unidirectional conductor D2 allows a first supply voltage output by a first power supply module 110 to be delivered to the battery management system when the energy storage submodule 10 operates normally, while allowing a second supply voltage output by a second power supply module 120 to be only in a hot standby state, without consuming power.

In the technical solution of this embodiment of this application, the power supply selection module 130 is configured to, when the energy storage submodule 10 is in a normal operating state, enable the first switch element S1 to be in a normally closed state. Since the sum of the impedance of the first switch element S1 and the impedance of the first unidirectional conductor D1 is less than the impedance of the second unidirectional conductor D2, the battery management system is powered by a battery module Bat within a same electric cabinet 100. After the energy storage submodule 10 is bypassed, a control system controls the first switch element S1 to open. In this case, power is drawn from a direct-current bus V+/V- and supplied to the battery management system. Additionally, the first unidirectional conductor D1 and the second unidirectional conductor D2 can also prevent backflow of current flowing to the output terminal out of the power supply selection module 130, providing anti-interference protection for the first power supply module and the second power supply module and improving the stability of the power supply to the battery management system.

In some embodiments, the first unidirectional conductor D1 includes a first diode, where an anode and a cathode of the first diode respectively serve as the input terminal and the output terminal of the first unidirectional conductor D1. The diode is used to implement the first unidirectional conductor D1, providing backflow prevention and making the cost and loss relatively low.

In some embodiments, the number of second diodes included in the second unidirectional conductor D2 is at least one greater than the number of first diodes. A positive electrode and a negative electrode formed after the second diodes are connected in series in a same direction are respectively connected to the input terminal and the output terminal of the second unidirectional conductor D2. The positive electrode formed after the second diodes are connected in series in the same direction refers to an anode of the 1st second diode in a current transmission direction. The negative electrode formed after the second diodes are connected in series in the same direction refers to a cathode of the last second diode in the current transmission direction. The purpose of enabling the number of the second diodes to be at least one greater than the number of the first diodes is to allow the sum of the impedance of the first switch element S1 and the impedance of the first unidirectional conductor D1 to be less than the impedance of the second unidirectional conductor D2.

In the technical solution of this embodiment of this application, the diodes are also used to implement the second unidirectional conductor D2, providing backflow prevention and making the cost and loss relatively low. Additionally, the purpose of enabling the number of the second diodes to be at least one greater than the number of the first diodes is to ensure that when the energy storage submodule 10 operates normally, the battery management system is primarily powered by the battery module Bat within the same electric cabinet 100, and the first power supply module 110 can also remain in a hot standby state.

According to some embodiments of this application, FIG. 7 shows a schematic structural diagram of a power supply circuit for a battery management system of an energy storage system according to an embodiment of this application. Referring to FIGs. 6 and 7, for ease of description, only parts related to this embodiment are shown. Specific details are described below.

The energy storage submodule 10 further includes a power circuit 101 and a first controller 102. The power circuit 101 is connected to a battery module Bat and the first controller 102. The first controller 102 is configured to output an engagement signal and a disengagement signal. The power circuit 101 is configured to be connected to the battery module Bat based on the engagement signal so as to enable normal operation of the energy storage submodule 10, and break an electrical connection with the battery module Bat based on the disengagement signal so as to enable the energy storage submodule 10 to be bypassed. Meanwhile, the first controller 102 is connected to the first switch element S1. The first controller 102 is configured to: control the first switch element S1 to close when an energy storage submodule 10 where the battery management system is located operates normally; and control the first switch element S1 to open when the energy storage submodule 10 where the battery management system is located is bypassed.

The first controller 102 may be, for example, a submodule controller (SubModuleController, SMC). Specifically, the SMC is configured to monitor an operating state of the energy storage submodule 10, receive control information for the energy storage submodule 10 from a valve base controller (Valve Base Controller, VBC) of an energy storage valve, manage the power circuit 101 of the energy storage submodule 10, control the engagement and disengagement of each energy storage submodule 10, and transmit a state of the energy storage submodule 10 to the VBC. When the SMC detects a fault in the energy storage submodule 10, the SMC bypasses the faulty energy storage submodule 10 and transmits fault information to the VBC, ensuring that other energy storage submodules 10 continue to operate normally.

The first controller 102 may be, for example, a battery management controller (battery management controller, BMC). The BMC communicates with the SMC to receive a signal transmitted by the SMC and used to indicate normal operation of the energy storage submodule 10. The BMC controls the first switch element S1 in the power supply selection module 130 to be turned on, and the first power supply module 110 is selected to supply power to the battery management system. When the BMC receives a signal transmitted by the SMC and used to indicate that the energy storage submodule 10 is bypassed, the BMC controls the first switch element S1 in the power supply selection module 130 to be turned off, and the second power supply module 120 is selected to supply power to the battery management system. The control method is simple and reliable.

Still referring to FIG. 7, in some embodiments, the power circuit 101 includes second switch elements T1 and T2 and an energy storage element C1 connected in parallel with the second switch elements T1 and T2. The second switch elements T1 and T2 are connected to the first controller 102.

A plurality of second switch elements T1 and T2 may be provided. The plurality of second switch elements T1 and T2 are connected in series and/or in parallel. The energy storage element C1 is connected in parallel with the plurality of second switch elements T1 and T2 connected in series and/or in parallel. In specific implementations, the plurality of second switch elements T1 and T2 connected in series and/or in parallel include a full-bridge circuit or a half-bridge circuit. When the power circuit 101 is connected to the battery module Bat, the energy storage element C1 can be charged first to reduce the impact of large current on the second switch elements T1 and T2, improving the reliability of the energy storage submodule 10.

In the technical solution of the embodiments of this application, the power circuit 101 includes a half-bridge circuit or a full-bridge circuit. It should be noted that the half-bridge circuit is a power circuit 101 including two switch tubes, while the full-bridge circuit is a power circuit 101 including four switch tubes. The half-bridge circuit has low cost and a simple circuit. The full-bridge circuit has higher cost and a relatively complex circuit. However, the full-bridge circuit has less interference and higher reliability compared to the half-bridge circuit. This achieves flexible configuration of the power circuit 101, improving the design flexibility of the energy storage submodule 10.

In some embodiments, the first power supply module 110 includes a first direct current conversion circuit, where an input terminal of the first direct current conversion circuit is connected to the battery module Bat, and an output terminal out of the first direct current conversion circuit is connected to the power supply selection module 130. This provides a simple and reliable implementation of the first power supply module 110.

In some embodiments, the second power supply module 120 includes a second direct current conversion circuit, where an input terminal of the second direct current conversion circuit is connected to a direct-current bus V+/V-, and an output terminal out of the second direct current conversion circuit is connected to the power supply selection module 130. This provides a simple and reliable implementation of the second power supply module 120. The first power supply module 110 and the second power supply module 120 respectively use different direct current conversion circuits, improving the reliability.

According to a second aspect, an embodiment of this application further provides an energy storage valve, where the energy storage valve includes a plurality of energy storage submodules 10 and the power supply circuit for the battery management system of the energy storage system as described above. In some embodiments, referring to FIG. 1, the plurality of energy storage submodules 10 may be connected in series to the direct-current power supply bus Vbus+/Vbus-.

In the technical solution of this embodiment of this application, when the energy storage submodule 10 of the energy storage valve operates normally, a battery module Bat of the energy storage submodule 10 is selected to supply power to the battery management system. When the energy storage submodule 10 is bypassed, energy storage submodules 10' where the battery management system is not located (referring to FIGs. 2 and 4) are selected to supply power to the battery management system, thereby mitigating the issue of over-discharge in the battery module Bat of the bypassed energy storage submodule 10 due to the continuous consumption of the battery management system.

According to a third aspect, an embodiment of this application further provides an energy storage station, where the energy storage station includes a plurality of energy storage submodules 10 and the power supply circuit for the battery management system of the energy storage system as described above. In some embodiments, referring to FIG. 1, the plurality of energy storage submodules 10 may be connected in series to a direct-current power supply bus Vbus+/Vbus-.

In the technical solution of this embodiment of this application, when the energy storage submodule 10 of the energy storage station operates normally, the battery module Bat of the energy storage submodule 10 is selected to supply power to the battery management system. When the energy storage submodule 10 is bypassed, energy storage submodules 10' where the battery management system is not located (referring to FIGs. 2 and 4) are selected to supply power to the battery management system, thereby mitigating the issue of over-discharge in the battery module Bat of the bypassed energy storage submodule 10 due to the continuous consumption of the battery management system.

In conclusion, it should be noted that the above embodiments are merely intended for describing the technical solutions of this application but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A power supply circuit for a battery management system of an energy storage system, wherein the energy storage system comprises a plurality of energy storage submodules; and the power supply circuit for the battery management system comprises:
a first power supply module connected to a battery module and configured to supply power to the battery management system based on electrical energy of the battery module; and
a second power supply module connected to a direct-current bus and configured to supply power to the battery management system based on electrical energy of the direct-current bus, wherein the electrical energy of the direct-current bus comes from energy storage submodules in the energy storage system other than the energy storage submodule where the battery management system is located.

2. The power supply circuit for the battery management system according to claim 1, further comprising a power supply selection module, wherein the power supply selection module is connected to the first power supply module, the second power supply module, and the battery management system; and the power supply selection module is configured to:
select the first power supply module to supply power to the battery management system when the energy storage submodule where the battery management system is located operates normally; and
select the second power supply module to supply power to the battery management system when the energy storage submodule where the battery management system is located is bypassed.

3. The power supply circuit for the battery management system according to claim 1 or 2, wherein the battery module is connected to a battery management system within a same electric cabinet via the first power supply module and configured to supply power to the battery management system.

4. The power supply circuit for the battery management system according to claim 1, wherein when the energy storage submodule where the battery management system is located operates normally, the second power supply module is in a hot standby state.

5. The power supply circuit for the battery management system according to claim 2 or 4, wherein the power supply selection module comprises a first input terminal, a second input terminal, an output terminal, and a changeover switch unit, wherein
the first input terminal of the power supply selection module is connected to an output terminal of the first power supply module and a first terminal of the changeover switch unit; the second input terminal of the power supply selection module is connected to an output terminal of the second power supply module and a second terminal of the changeover switch unit; a third terminal of the changeover switch unit is connected to the output terminal of the power supply selection module; the output terminal of the power supply selection module is connected to a power supply terminal of the battery management system; and the changeover switch unit is configured to select the first input terminal of the power supply selection module to be connected to the output terminal or select the second input terminal of the power supply selection module to be connected to the output terminal.

6. The power supply circuit for the battery management system according to claim 5, wherein the changeover switch unit comprises a first switch element, a first unidirectional conductor, and a second unidirectional conductor; one terminal of the first switch element serves as the first terminal of the changeover switch unit; another terminal of the first switch element is connected to an input terminal of the first unidirectional conductor; an input terminal of the second unidirectional conductor serves as the second terminal of the changeover switch unit; and an output terminal of the first unidirectional conductor is connected to an output terminal of the second unidirectional conductor and serves as the third terminal of the changeover switch unit;
wherein a sum of impedance of the first switch element and impedance of the first unidirectional conductor is less than impedance of the second unidirectional conductor.

7. The power supply circuit for the battery management system according to claim 6, wherein the first unidirectional conductor comprises a first diode, and an anode and a cathode of the first diode respectively serve as the input terminal and the output terminal of the first unidirectional conductor.

8. The power supply circuit for the battery management system according to claim 7, wherein the number of second diodes comprised in the second unidirectional conductor is at least one greater than the number of first diodes; and a positive electrode and a negative electrode formed after the second diodes are connected in series in a same direction are respectively connected to the input terminal and the output terminal of the second unidirectional conductor.

9. The power supply circuit for the battery management system according to claim 6, wherein the energy storage submodule further comprises a first controller, the first controller is connected to the first switch element, and the first controller is configured to: control the first switch element to close when the energy storage submodule where the battery management system is located operates normally; and control the first switch element to open when the energy storage submodule where the battery management system is located is bypassed.

10. The power supply circuit for the battery management system according to claim 7, wherein the first controller comprises a submodule controller or a battery management controller.

11. The power supply circuit for the battery management system according to claim 1, wherein the energy storage submodules in the energy storage system are connected in parallel to the direct-current bus.

12. The power supply circuit for the battery management system according to claim 1, wherein the first power supply module comprises a first direct current conversion circuit, an input terminal of the first direct current conversion circuit is connected to the battery module, and an output terminal of the first direct current conversion circuit is connected to the power supply selection module.

13. The power supply circuit for the battery management system according to claim 1, wherein the second power supply module comprises a second direct current conversion circuit, an input terminal of the second direct current conversion circuit is connected to the direct-current bus, and an output terminal of the second direct current conversion circuit is connected to the power supply selection module.

14. An energy storage valve, wherein the energy storage valve comprises a plurality of energy storage submodules and the power supply circuit for the battery management system of the high-voltage direct-connected energy storage system according to any one of claims 1 to 13.

15. An energy storage station, wherein the energy storage station comprises a plurality of energy storage submodules and the power supply circuit for the battery management system of the high-voltage direct-connected energy storage system according to any one of claims 1 to 13.
